Europäisches Patentamt

European Patent Office

Office européen des brevets

(19)

(11) Publication number: **0 035 048**
**B1**

(12) **EUROPEAN PATENT SPECIFICATION**

(45) Date of publication of patent specification: **06.03.85**

(51) Int. Cl.⁴: **H 04 L 9/02**

(21) Application number: **80101082.8**

(22) Date of filing: **04.03.80**

(54) Cipher system using a variant key matrix.

(43) Date of publication of application:
**09.09.81 Bulletin 81/36**

(45) Publication of the grant of the patent:
**06.03.85 Bulletin 85/10**

(84) Designated Contracting States:
**DE FR GB**

(56) References cited:
**DE-C- 978 059**
**FR-A-1 574 598**
**US-A-3 683 513**
**US-A-4 157 454**

(73) Proprietor: **International Business Machines Corporation**
**Old Orchard Road**
**Armonk, N.Y. 10504 (US)**

(72) Inventor: **Feistel, Horst**
**94 Fifer Lane**
**Lexington, Mass.02173 (US)**

(74) Representative: **Suringar, Willem Joachim**
**IBM Nederland N.V. Patent Operations**
**Watsonweg 2**
**NL-1423 ND Uithoorn (NL)**

EP 0 035 048 B1

## Description

This is a cipher system using a variant key matrix for enciphering or deciphering a stream of binary data by means of a product cipher. A clear message represented in a binary data format is transformed into a cipher message or vice versa by operating on each consecutive bit of clear information with a complex modulo-two addition function. This function is dependent on previous internal cipher digits and varies for each message bit processed. The function is developed by continually shifting a key matrix under the control of a varying control matrix. The control matrix is formed from the sub-products of the complex function developed in generating each cipher bit.

With the growing use of remote-access computer networks which provide a large number of subscribers with access to "data banks" for receiving, storing, processing and furnishing information of a confidential nature, the need for data security has increased significantly.

In the field of communications, cryptography has long been recognized as a means for achieving security and for encrypting messages for maintaining secrecy of communications. For example, one well-known technique which has been used for generating "ciphertext" from "cleartext" messages is substitution. In systems which utilize substitution, letters or symbols that comprise the clear message are replaced by some other symbols in accordance with a predetermined "key". The resulting substituted message is a cipher which is expected to be secret and hopefully can not be understood without the knowledge of the secret key. A particular advantage of substitution in accordance with a prescribed key is that the deciphering operation is easily implemented by reverse application of the key. A common implementation of substitution techniques may be found in ciphering-wheel devices, for example, those disclosed in U.S. Patents 2,964,856 and 2,984,700.

Further teachings on the design principles of more advanced substitution techniques may be found in "Communication Theory of Secrecy Devices" by C. E. Shannon, Bell System Technical Journal, Vol, 28, Pages 656—715, October 1949. Shannon, in his paper, presents further developments in the art of cryptography for expounding the product cipher, that is, the successive application of two or more distinctly different kinds of message-symbol transformations. One example of a product cipher consists of a symbol substitution followed by a symbol transposition.

Another wellknown technique for enciphering a clear message communication is the use of a stream-generator sequence which is utilized to form a modulo sum with the symbols that comprise a clear message. The cipher output message stream formed by the modulo sum would then be unintelligible to the receiver of the message, if it does not have knowledge of the stream-generator sequence. Examples of such stream-generators may be found in U.S. Patents 3,250,855 and 3,364,308.

Various ciphering systems have been developed in the prior art for rearranging communication data in some ordered way to provide secrecy. For example, U.S. Patent 3,522,374 teaches the processing of a clear message with a key-material generator that controls the number of cycles for enciphering and deciphering. Related to this patent is U.S. Patent 3,506,783 which discloses the means for generating the key-material which gives a very long pseudo-random sequence.

In the area of computer data communications, it has generally been found that product ciphers are superior to other types of ciphering schemes, as discussed in "Cryptography and Computer Privacy", by H. Feistel, Scientific American, Vol. 228, No. 5, May 1973, pp. 15—23. Examples of product ciphering systems are disclosed in U.S. Patent 3,798,359, entitled "Block Cipher Cryptographic System", and U.S. Patent 3,798,360, entitled "Step Code Ciphering System", and U.S. Patent 3,796,830, entitled "Recirculating Block Cipher Cryptographic System". These patents present systems for generating a product cipher under the control of the unique user key. With careful selection of the size of the data block and the key size, the probability of ever cracking the cipher becomes extremely small. That is, a cipher becomes impractical to crack by trial of all possible combinations of the key. This is particularly true if the cipher text reveals no information with regard to the unique user key.

Another cipher system which is useful for handling relatively short data blocks is disclosed in U.S. Patent 4,157,454. This patent discloses in particular a key controlled cryptographic system comprising input means which introduce a sequence of electrical signals in binary form as message information to be enciphered or deciphered, auxiliary input means which present a plurality of binary signals as cipher key initiating information, matrix storage means which store a cipher key in a matrix array, modulo-two adder means connected for adding a selected binary element from said key matrix storage means with each of the binary signals obtained consecutively from said input means to produce a binary signal constituting an enciphered or deciphered bit of output message information, feedback means connected to inputs of said modulo-two adder means and comprising non-affine transformation means for transforming the feedback signals derived from the said inputs, and shift control means for rearranging selected matrix elements within said key matrix array in dependence of the said transformed feedback signals each time after an input bit has been enciphered or deciphered, whereby the said matrix array represents a variant cipher key which is currently developed as a function of the message information processed. While the variant, message-dependent cipher key of this system provides a high degree of security, this system still may be improved in the following respects. Input data are handled in blocks of 128 bits (16 bytes), or if shorter blocks are to be handled the block length must be specified in advance. Each block is enciphered using the same initial key whereby identical messages will lead to identical ciphers. Information bits cannot be entered in a continuous stream but only intermittently, since the operation mode is such that each data block is passed three times in succession through the apparatus for a complex and secure encipherment.

The systems disclosed in the above referenced patents are extremely useful in providing secure communications. However, these systems impose a requirement as to a specific message size. Generally, most product block ciphers are restricted to a specific message vector. Thus, if it is desired to transmit a small number of bits of information, it is necessary to "pad" the information with extraneous data in order to form the proper size message block.

Therefore it is an object of this invention to provide a cryptographic system which operates on a message of arbitrary size with a variant key which changes for each digit of message information that is processed.

It is another object of the present invention to provide a cryptographic system in which the ciphering key is successively varied as a function of the message cipher output, without the need of frequently resetting the key to the initial value.

It is a further object of the present invention to provide a cryptographic system in which the cipher key is arranged in a two-dimensional matrix in which the columns or rows are rearranged after each cipher operation as a function of the cipher text bit generated from operating on the previous message bit.

In accordance with this invention as claimed a variant key matrix cipher system is provided which permits the ciphering or deciphering of long streams of binary data without a need of segmenting the stream into predesignated blocks. The system is first initialized with a primer message that is obtained from a random binary source. This random binary source is introduced into the system for the purpose of initializing the key matrix. The initialization operation is performed at the transmitter in such a manner so as to permit the receiver to duplicate it, step by step, upon receipt of the cipher digits.

Subsequent to the initialization with the primer, message binary information is introduced into the system for ciphering. The variant key is changed for each bit of message information that is processed. That is, the system operates serially on the message information, bit by bit. A plurality of cascaded modulo-two adders is utilized for the purpose of applying the cipher key to the input message. The intermediate products within the plurality of cascaded modulo-two adders are used in a feedback fashion to cause a variation of the key matrix prior to processing the next bit of message information. In addition to the variation of the key matrix caused by the feedback from the modulo-two adders, a further variance on the key is created by substituting a column within the matrix with a binary word that is generated as a function of a non-affine transformation of the binary word that is input into the modulo-two adders. The cipher or decipher output is taken from a single stage of the cascaded modulo-two adders. Both the transmitter and receiver cipher-decipher units operate in exactly the same manner.

Of course, the same feedback values are to be derived in the deciphering unit, for varying the key matrix, as were used in the ciphering unit. Therefore, it is the deciphered cleartext bit that must be used to generate these feedback values in the deciphering mode, to duplicate what was done in the ciphering unit.

Fig. 1 is a block diagram of the cryptographic system.

Figs. 2A—2F are a schematic diagram of the cryptographic system shown in figure 1.

Fig. 3 is a schematic diagram of one of the K registers shown in figure 2A and 2D.

Fig. 4 is a schematic diagram of one of the N registers shown in figure 2B and 2E.

Fig. 5 is a schematic diagram of the 16 word "S box" shown in figure 2E.

Fig. 6 is a schematic diagram of the 256 word "S" box shown in figure 2B.

In the art of cryptography there are several types of ciphering systems.

A "strong" cipher may be obtained by using a key matrix which is a complex function of the message being ciphered. This would present a set of keys rather than a single key. This set of keys may be represented in the form of a matrix which is of suitable size. It should be noted for the purpose of understanding the invention described herein that whenever the term suitable size is used, it is generally meant that the size is sufficiently large such that using ordinary probability theory it would be impractical for an opponent to attempt all possibilities in order to guess the unique combination of binary digits which represent the key. For example, a matrix of dimension 128×16 would be sufficiently large to avoid trial and error determination of the key.

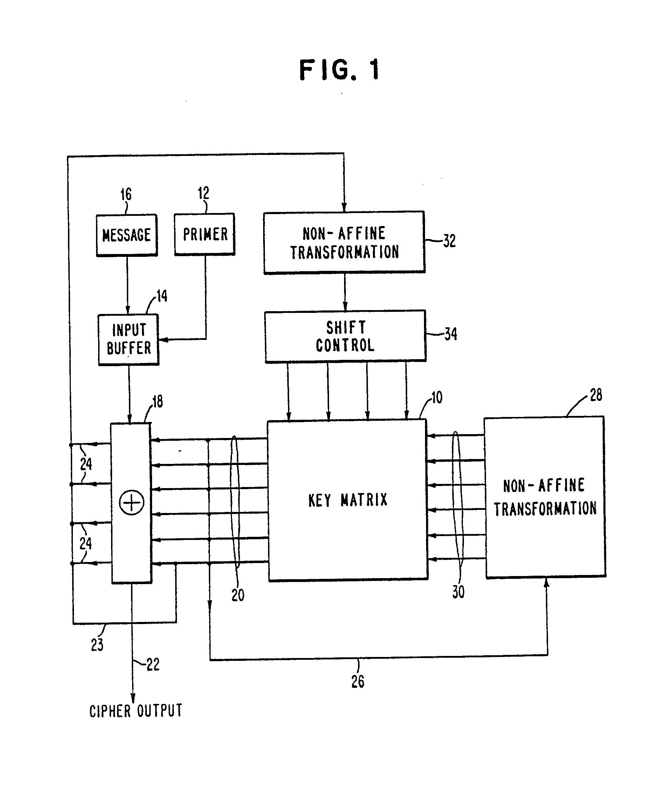

Referring now to Fig. 1, there is shown a block diagram representation of a variant key matrix cipher system. Initially, the system is "unprimed". That is, key matrix 10 contains an initial key which is stored in the matrix element positions. In order to begin operating the cipher system, it is necessary to prime such system by introducing a random number from primer 12 into the system for modifying the fixed cipher key within key matrix 10. Primer 12 consists of a random number generator of conventional type which are well known in the art. The random number is sequentially introduced into input buffer 14 for input into the cipher system. The random number that is output by primer 12 is of sufficient length to cause the entire key to be varied as a function of the random number. The input buffer 14 serves the function of storing the digital information received from either primer 12 or message source 16. Furthermore, input buffer 14 shifts this information into the modulo-two adder 18.

During initialization of the system, the primer 12 feeds a sequence of random digital information to the input buffer 14 which in turn passes the random information into adder 18. At the modulo-two adder 18, a modulo-two addition is performed on the random binary digits and the information contained in selected elements of the key matrix. For example, the left-most elements of the first column in the key matrix 10 are introduced into the modulo-two adder by lines 20. Then, within modulo-two adder 18, a modulo-two addition is performed successively by a set of cascaded single-bit modulo-two additions with each matrix element and the respective outputs of each of the modulo-two adders contained in adder 18. The output of the modulo-two addition is presented on line 22, which output represents the cipher message output.

As an intermediate product of the modulo-two addition performed by modulo-two adder 18, lines 24 and line 23 are used as feedback control for rearranging or scrambling the elements in the key matrix 10. Simultaneously with introduction of the key on lines 20, digital information is fed back along line 26 to non-affine transformation device 28. Feedback line 26 contains an N-bit word which represents the digital information that was introduced into the modulo-two adder 18 along lines 20. This N-bit word is reintroduced into selected elements of the key matrix 10 after transforming the N-bit word through a non-affine transformation device 28. The non-affine transformation may be performed by a substitution function. Exemplary techniques for generating substitutions may be found in the above referenced patents. The transformed N-bit number which is the output of non-affine transformation device 28 appears on lines 30 and is introduced into the key matrix 10 at selected memory elements. The introduction of the transformed N-bit number is performed by respectively placing one digit in each of the rows from which information was taken during the transmitting of information on lines 20 to modulo-two adder 18. Thus, there is achieved a conservation of information in the sense that for each binary digit taken out of the key matrix, another binary digit is replaced into the key matrix. After having placed the transformed N-bit number in the matrix 10, which, for example, may take the form of loading the right-most column in the matrix with the N-bit transformed number, the system is now ready for a matrix operation.

As was mentioned previously, the information contained on feedback lines 24 is fed back in some form to the key matrix 10. The binary information appearing on lines 24 is introduced into a non-affine transformation device 32 for the purpose of creating a P-bit word which is then used by shift control 34 to control the rearrangement of the elements in the matrix. An exemplary transformation is the circulation of each of the rows in the key matrix 10 in accordance with a binary number represented by information contained in the shift control 34. After the matrix transformation operation is executed, the key matrix is now in a form which permits the repetition of all of the above steps with a variant key contained in key matrix 10. When the primer 12 has been exhausted, message information from message source 16 is introduced into the input buffer 14.

During the priming operation at the transmitter station, the cipher output is sent to a receiving station, where a decipher operation is performed so that subsequent messages may be de-ciphered with an identical key as is used by the transmitter station. The primer source 12, which represents a key element in the system, and the key in the key matrix 10 must be maintained secure. That is, they must not be able to be accessed in any manner by individuals using the system. These security aspects of primer 12 and matrix 10 may be achieved by using appropriate seals, circuits which self-destruct upon tampering, or other well known means.

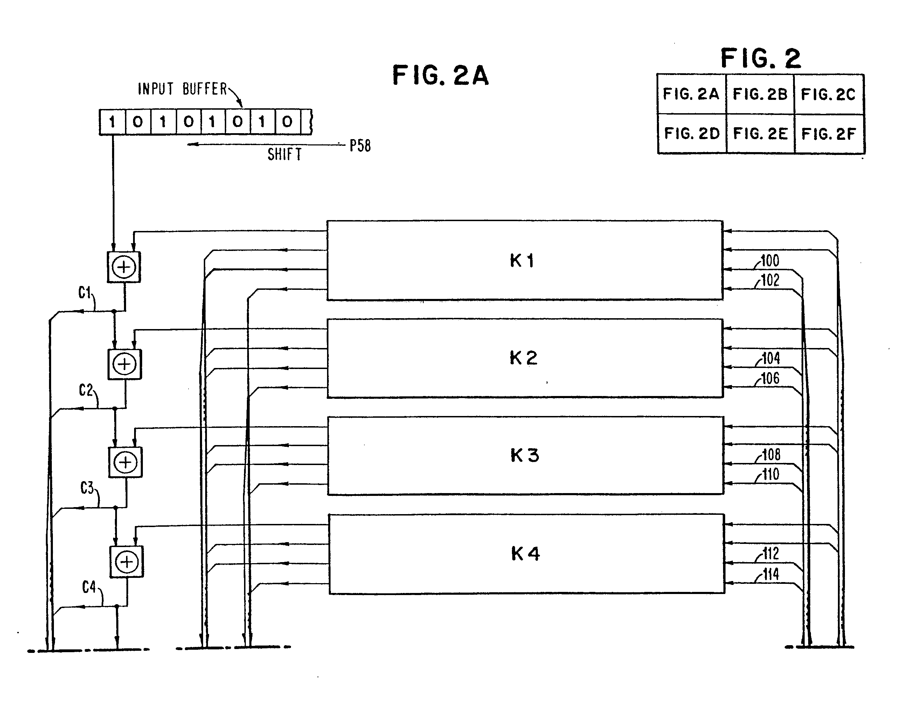

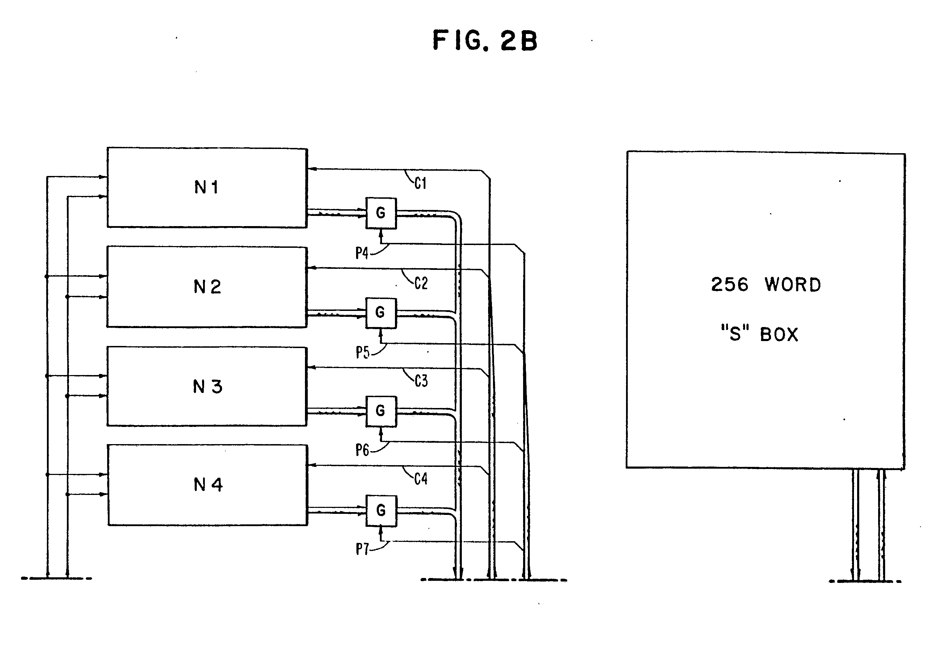

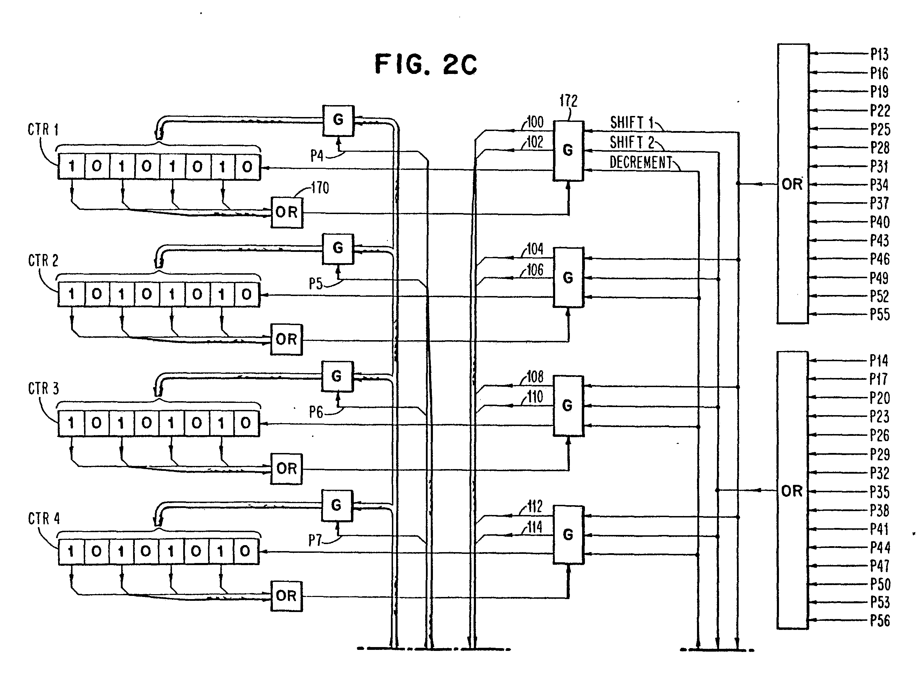

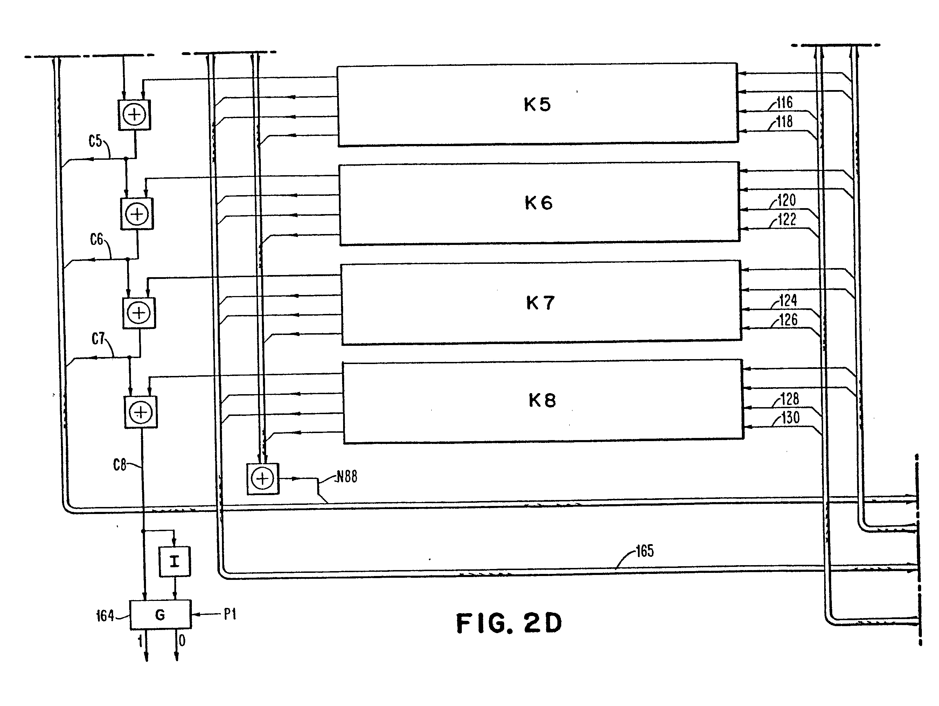

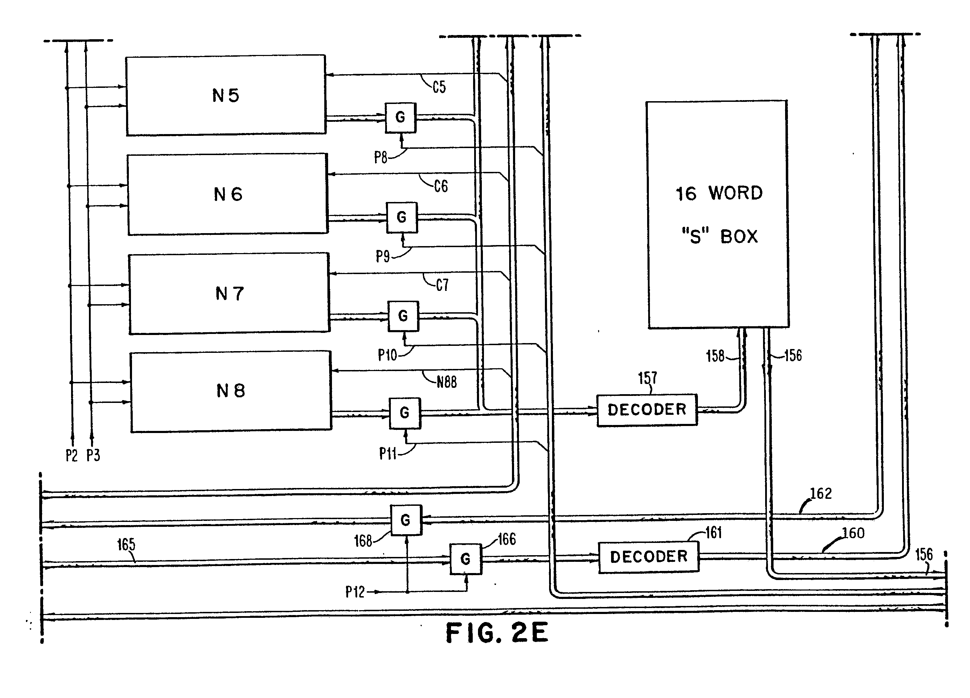

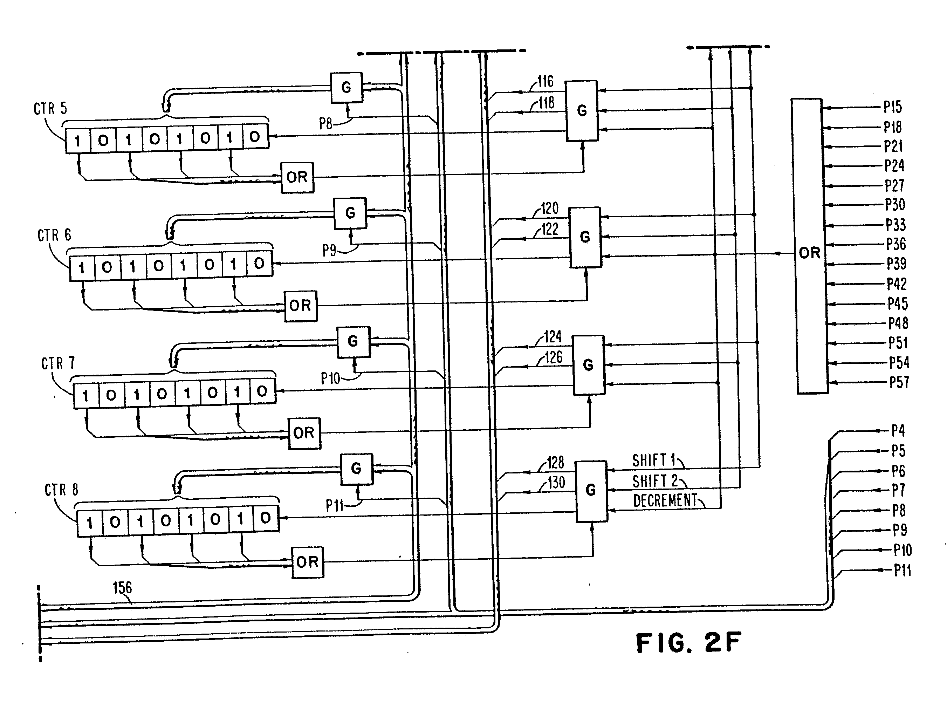

Reference should now be made to Fig. 2A, 2B, 2C, 2D, 2E and 2F where there is shown a detailed schematic diagram of the cryptographic system. Figs. 2A—2F may be arranged in the manner shown in Fig. 2. For the purpose of simplicity and ease of understanding the invention disclosed herein, the various elements in the cryptographic system have been shown in a reduced size. That is, the size of the key matrix 10 is substantially smaller than that which would be required in a working system. However, it should be noted that the enlargement of the size of the key matrix 10 does not alter any of the principles taught herein but would make the understanding of the invention much more difficult due to the sheer increase of the number of elements in the system with their interconnecting lines.

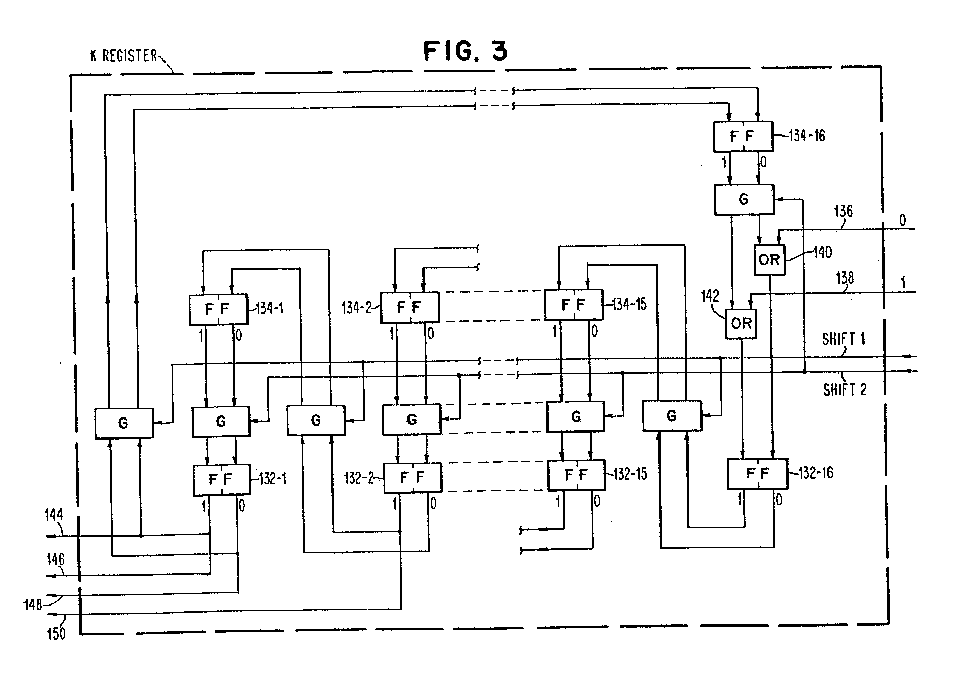

The key matrix 10 is represented in Fig. 2 as being formed by eight shift registers. Each of these registers which are designated by the labels K1 through K8 are identical and are represented in further detail in Fig. 3. Referring to Fig. 3, there is shown the structure of an exemplary K register. For the purpose of describing the system in its contracted form, it is assumed that each K register is 16 bits long. The digital information in the K register is contained in flip-flops 132-1, 132-2, ... , 132-15, 132-16. Each of the K shift registers is a "double rank" shift register with intermediate storage being provided by the flip-flops labeled 134-1, 134-2, ... , 134-15, 134-16. In order to operate the K register, two shift pulses are required. These two shift pulses are provided on lines labeled "shift 1" and "shift 2" as shown in Fig. 3. When a pulse is applied to a line labeled "shift 1", the information contained in flip-flop 132-1 is transferred to flip-flop 134-16. Similarly, the information contained in flip-flop 132-2 is transferred to flip-flop 134-1 and the information contained in flip-flop 134-16 is transferred to flip-flop 134-15. When a pulse appears on the line labeled "shift 2", the information containediin flip-flop 136-16 is transferred to 132-16. Similarly, the information contained in flip-flop 134-15 is transferred to flip-flop 132-15 and the information in flip-flop 134-2 is transferred to flip-flop 132-2 and the information in flip-flop 134-1 is transferred to flip-flop 132-1. In this manner, a shift of one position to the left is accomplished. The digital information in flip-flop 132-16 may be changed by applying an input to either one of lines 136 and 138. These inputs can extend through either one of OR circuits 140 or 142 to flip-flop 132-16. Thus, the right-most column represented by the right-most bit in the K registers of Fig. 2 may be changed. In Fig. 3, it should be noted that the information contained in flip-flop 132-1 and 132-2 extend to the left on lines 144, 146, 148 and 150. These lines extend to circuitry which is described at a further point in this specification.

Now having discussed the operation of one of the K registers in the key matrix 10, attention is now given to the cipher key variation. As indicated with regard to Fig. 1, the key matrix stores an initial key and during the priming operation, a random message is introduced into the system for the purpose of varying the cipher key, which would result in a change and rearrangement of binary "0's" or "1's", contained in elements of the key matrix 10. As discussed previously, this cipher key is variant and continually changing as a function of the cipher message output.

The continually changing cipher key is varied for each single bit of information, be it primer or message. Referring to Fig. 2, there is shown a cable 165 emanating from the left-most side of the K registers. The binary word presented along cable 165 is made to undergo a non-affine transformation and the transformed binary word is then loaded into the right-most column of the K matrix, or in other words, the right-most bit in each of the K registers is loaded with the respective bit from the transformed binary word.

Simultaneously with the generation of the cipher, the key shift control 34 operates in such a manner as to rearrange the elements of the key matrix 10. The shift control 34 receives as input a non-affine transformed binary word derived from the intermediate cipher products of the modulo-two adder 18 and rearranges the elements in the key matrix 10 by circulating the information contained in each of the K registers K1—K8. The P-bit binary word which is input into the non-affine transformation device 32 is derived from a plurality of registers identified as N1, N2, N3, N4, N5, N6, N7 and N8. Each of these registers respectively interacts with the modulo-two addition relating to the respective K register left-most bit position.

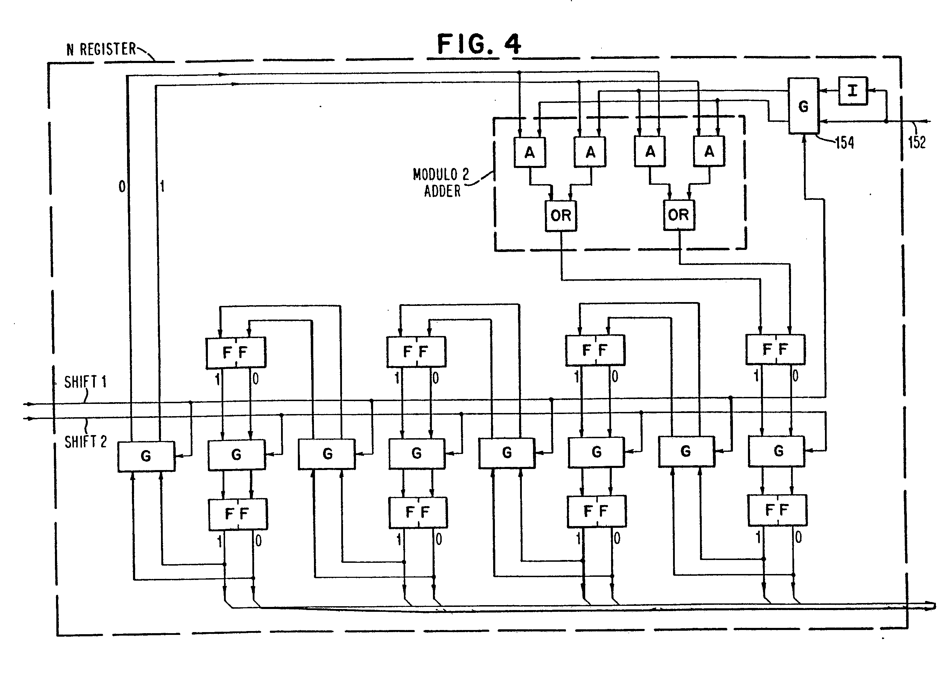

Now referring to Fig. 4, there is shown a detailed schematic diagram of one of the N registers. It should be noted, that each of the N registers are identical. The N register is quite similar to the K register shown in Fig. 3 except that it only contains four bit positions. Except for its limited size, the operation of the N register is identical with that of the K register. Accordingly, a repetition of such operation will not be presented herein.

As input to the N register, there is a line 152 which presents information that is added, modulo-two, to the contents of the left-most flip-flop of the N register. This addition takes place whenever a pulse is applied to the "shift 1" line. When the line labeled "shift 1" is activated, gate 154 is also activated and permits the modulo-two addition to take place. The result of this modulo-two addition is then entered into the right-most flip-flop of the N register when a pulse is applied to the "shift 2" line.

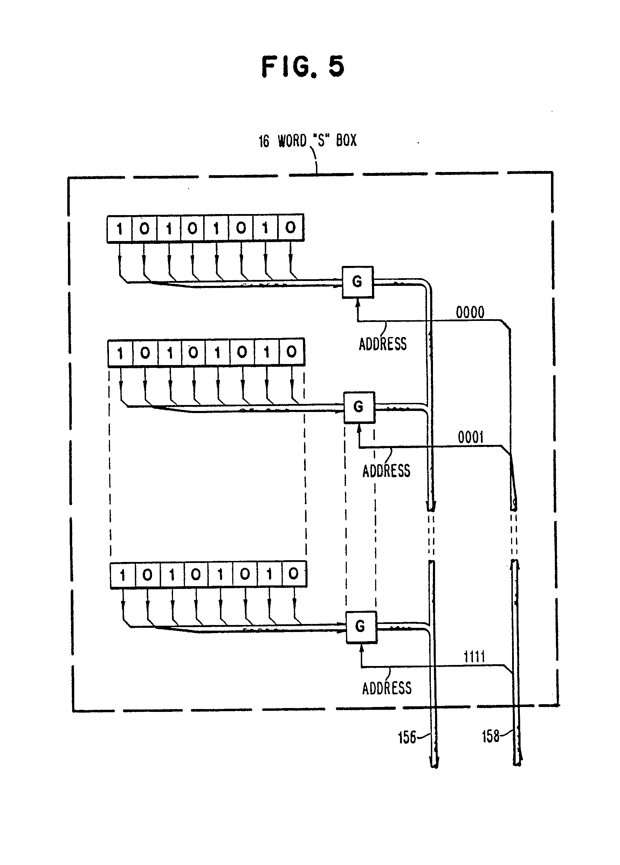

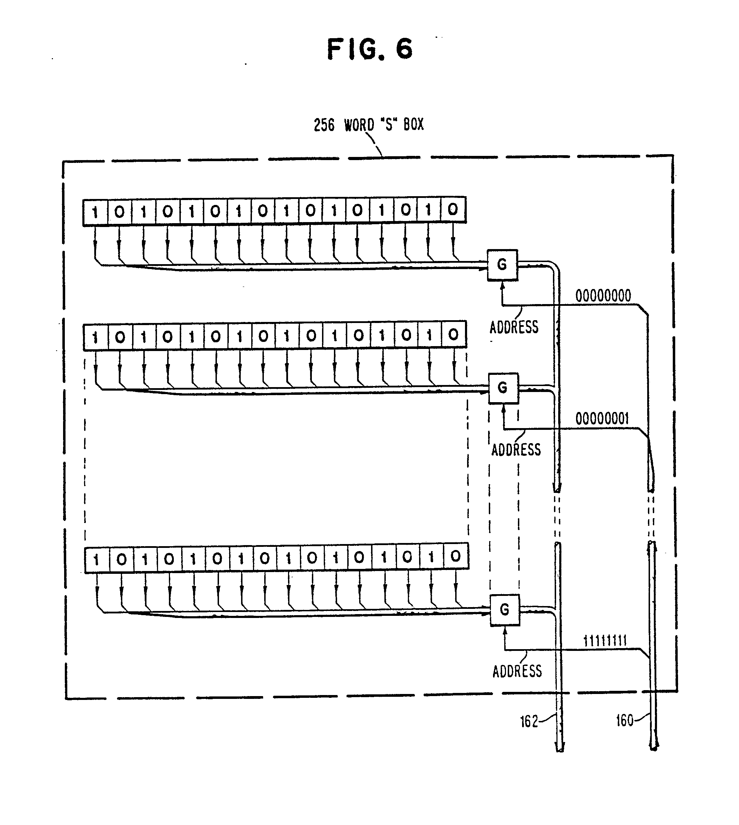

As was shown with regard to Fig. 1, the system contains two non-affine transformation devices 28 and 32. Non-affine transformation device 28 is represented by the 256 word "S" box and non-affine transformation device 32 is represented by the 16 word "S" box. Both of these non-affine transformation devices are substitution devices that transform an n-bit binary word into another n-bit binary word of same dimension, that presents one out of the $2^n$ possibilities of binary numbers that can be contained in the n-bit size word. Both of these substitution devices 28 and 32 are shown schematically in Figs. 5 and 6 respectively. The 16 word "S" box of Fig. 5 contains 16 words of 4-bit storage. Each word is addressed by one of the 16 wires which are contained in cable 158. The signal values carried on the 16 wires represent a binary number which corresponds to one of the registers which is gated by this binary number. Contained in each register is one out of possible sixteen binary words. The input to the 16 word "S" box is a 16-bit binary number which is the output of decoder 157. Decoder 157 receives a 4-bit modulo-16 number from each of the N registers and decodes the 4-bit number into a 16-bit binary number. Then, the 16-bit binary number is substituted in the 16 word "S" box by another 4-bit binary number which is provided as output on cable 156. The 256 word "S" box operates in a very similar manner to that which was described for the 16 word "S" box. The input to the 256 word "S" box is derived from decoder 161 which decodes an 8-bit modulo-256 number as derived from the output of the left-most column of the key matrix as contained in the left-most bit position in each of the K registers. The decoder 161 decodes the modlulo-256 number into a 256-bit binary number which is then used as an address for selecting one out of the 256 registers that corresponds to the specific address and provides a substituted 8-bit number modulo-256 as output on cable 162.

It should be noted, that the substitution devices as described herein are in the form of a stored set of binary words which are addressed and gated in accordance with a decoded number. However, other techniques of performing substitutions or non-affine transformations are available. For example, reference may be made to above referenced patents.

Now having described the separate components of the system, attention is directed to the operation of the cryptographic system shown in Fig. 2. The priming of the system was previously discussed and will not be repeated at this point. For the purpose of simplicity, it is assumed that the system is fully primed and that the key matrix 10 as represented by the K registers contains a full cipher key. The message to be enciphered or deciphered is contained in the input buffer shown in Fig. 2A. The cleartext message as represented by the binary bits contained in the input buffer are exclusively ORed with the left-most bit in each of the K registers. The series of eight bits obtained from the left-most bit positions of the K registers represent the left-most column of the key matrix.

A successive chain of exclusive OR operations is executed in generating the internal or intermediate cipher bits $C_1$, $C_2$, $C_3$, $C_4$, $C_5$, $C_6$, $C_7$ and $C_8$. Bit $C_8$ represents the ciphertext information that is transmitted. This bit is communicated as output by gate 164 which operates under the control of clock pulse $P_1$. Simultaneously with the generation of cipher bits $C_1$—$C_8$, the next to left-most bit positions in the eight K registers are also added modulo-2 to form the bit identified as N88. The signal appearing on line N88 also appears on input line 152 of register N8 at the same time that cipher bits $C_1$—$C_7$ are introduced into the registers N1—N7. It is preferable to substitute the pulse on line N88 for the cipher pulse $C_8$ in generating the feedback signals for controlling the matrix shift control 34. By not utilizing the output cipher text as direct feedback for the matrix shift control 34, an additional measure of security is achieved.

Referring again to the cascaded chain of modulo-2 adders shown in Figs. 2A and 2D, it is seen that the cipher bits $C_1$—$C_7$ are intermediate products of the successive modulo-2 additions, and these cipher bits $C_1$—$C_7$ are fed back to the right-most bit positions in the N registers, N1—N7 respectively. Thus, when clock pulse $P_2$ is applied to the "shift 1" wires of the N registers, the binary vector consisting of the values $C_1$—$C_7$ and the value contained on line N88 is added modulo-2 to the left-most bit of each of the N registers. When the $P_3$ pulser is applied to the "shift 2" lines of the N registers, the values of $C_1$—$C_7$ and N88 which were previously entered into the N registers are transferred to the right-most bit of the N registers shown in Figs. 2B and 2E.

It should be understood that, in the deciphering mode, $C_8$ represents the deciphered cleartext bit, which first is to be placed back into the input buffer before the intermediate products $C_1$—$C_7$ are fed back to the N registers, so as to obtain the same feedback values as were used in the ciphering mode, i.e. in the sending unit.

The pulses $P_4$—$P_{11}$ are used to transfer the contents of the N registers to the counters shown in Figs. 2C and 2F. These are identified as CTR1, CTR2, CTR3, CTR4, CTR5, CTR6, CTR7 and CTR8. An example of the transfer operation would be the gating of the contents of register N1 to CTR1 by pulse $P_4$. In a similar manner the contents of the remaining seven registers are transferred to their respective counters shown in Figs. 2C and 2F under the control of clock pulses $P_5$—$P_{11}$. The clock pulses $P_4$—$P_{11}$ perform the additional function of transferring the contents of each of the N registers to the 16 word "S" box shown in Fig. 5 as an address for executing a substitution. The substituted word which is the output of the sixteen word "S" box is gated to the proper counter shown in Fig. 2C and 2F.

At this point, the system is prepared to modify the key matrix 10 by replacing the right-most column in the matrix with a binary vector which is a function of the left-most column of the key matrix 10. This is accomplished as shown in Figs. 2A and 2D by outputting the left-most bit positions of each of the K registers along cable 165 to decoder 161 for generating an address to select a substitute word in the 256 word "S" box and outputting the substituted word along cable 162 to the right-most bit positions of each of the K registers. This operation is accomplished under the control of the clock pulse $P_{12}$ which is input to gates 166 and 168.

Now having transformed the key matrix 10, the system now performs a matrix shift operation by circulating the information contained in each of the K registers as a function of the contents contained in the N registers. As discussed previously, the contents of the N registers are substituted and stored in the counters CTR1—CTR8. It is the counters CTR1—CTR8 which are then used under the control of clock pulses P13—P57 to recirculate the binary bits stored in each of the K shift registers.

The registers K are shifted in parallel as many positions as indicated by their associated counters CTR1—CTR8. Referring to CTR1, at the top of Fig. 2C, it should be noted that the OR circuit 170 continues to provide an output signal to gate 172 until the counter CTR1 contains a binary value zero. The output of the OR gate 170 permits the shift pulses on line 100 and 102 to pass through gate 172 as well as a decrement pulse for the purpose of decrementing the counter CTR1. For each decrement of the counter CTR1, the K1 register is shifted one position. When CTR1 has been decremented to zero, OR circuit 170 no longer provides a signal output, and therefore, the shift pulse and the decrement pulse are no longer gated through gate 172. In this manner, the number of shift pulses applied to register K1 is equal to the number that was stored in CTR1. The counters CTR2—CTR8 operate in identical manner as that described with regard to the counter CTR1. Thus, the variant key matrix as contained in the registers K1—K8 is scrambled in accordance with contents of counters CTR1—CTR8.

With regard to the control pulses P1—P58, reference should be made to Table 1 which lists all of the pulses utilized in the system and their respective functions. It should further be noted that clock pulses P1—P58 may be provided by conventional clock means.

TABLE 1

| | Clock Pulses | Function |
|---|---|---|
| | P-1 | Outgate message bit |
| | 2 | Shift 1 N Box |
| | 3 | Shift 2 N Box |
| | 4 | Gate N1 to 16 word S Box and gate S Box to CTR1 |
| | 5 | Gate N2 to 16 word S Box and gate S Box to CTR2 |
| | 6 | Gate N3 to 16 word S Box and gate S Box to CTR3 |
| | 7 | Gate N4 to 16 word S Box and gate S Box to CTR4 |
| | 8 | Gate N5 to 16 word S Box and gate S Box to CTR5 |
| | 9 | Gate N6 to 16 word S Box and Gate S Box to CTR6 |
| | 10 | Gate N7 to 16 word S Box and gate S Box to CTR7 |
| | 11 | Gate N8 to 16 word S Box and gate S Box to CTR8 |
| | 12 | Gate K101—K801 vector to 256 word S Box and gate S Box to K116—K816 vector |
| | 13 | Shift 1—K registers |
| 1 | 14 | Shift 2—K registers |
| | 15 | Decrement counters |
| | 16 | Shift 1—K registers |
| 2 | 17 | Shift 2—K registers |
| | 18 | Decrement counters |
| | 19 | Shift 1—K registers |
| 3 | 20 | Shift 2—K registers |
| | 21 | Decrement counters |
| | 22 | Shift 1—K registers |

**0 035 048**

TABLE 1 (contd.)

| | Clock Pulses | Function |
|---|---|---|
| 4 | 23 | Shift 2—K registers |
| | 24 | Decrement counters |
| | 25 | Shift 1—K registers |
| 5 | 26 | Shift 2—K registers |
| | 27 | Decrement counters |
| | 28 | Shift 1—K registers |
| 6 | 29 | Shift 2—K registers |
| | 30 | Decrement counters |
| | 31 | Shift 1—K registers |
| 7 | 32 | Shift 2—K registers |
| | 33 | Decrement counters |
| | 34 | Shift 1—K registers |
| 8 | 35 | Shift 2—K registers |
| | 36 | Decrement counters |
| | 37 | Shift 1—K registers |
| 9 | 38 | Shift 2—K registers |
| | 39 | Decrement counters |
| | 40 | Shift 1—K registers |
| 10 | 41 | Shift 2—K registers |
| | 42 | Decrement counters |
| | 43 | Shift 1—K registers |
| 11 | 44 | Shift 2—K registers |
| | 45 | Decrement counters |
| | 46 | Shift 1—K registers |
| 12 | 47 | Shift 2—K registers |
| | 48 | Decrement counters |
| | 49 | Shift 1—K registers |
| 13 | 50 | Shift 2—K registers |
| | 51 | Decrement counters |
| | 52 | Shift 1—K registers |

TABLE 1 (contd.)

| | Clock Pulses | Function |
|---|---|---|
| 14 | 53 | Shift 2—K registers |
| | 54 | Decrement counters |
| | 55 | Shift 1—K registers |
| 15 | 56 | Shift 2—K registers |
| | 57 | Decrement counters |
| | 58 | Shift input buffer |

While the invention has been described in terms of the exemplary embodiment disclosed herein, it should be recognized by those skilled in the art that alternative embodiments for carrying out the invention are within the skill of the art. For example, while the disclosed embodiment performs a key matrix shifting operation by effectively rearranging each of the rows in the matrix, it is possible to operate on the columns instead of the rows of the matrix or alternatively to transform both the rows and columns. Also, at any point in the above description, where a specific position of a register is accessed, it should be recognized by those skilled in the art that alternative embodiments may be made in which there is variation on which of the specific elements in the register are utilized at any specific time.

**Claims**

1. A key controlled cryptographic system comprising input means (14, 16) which introduce a sequence of electrical signals in binary form as message information to be enciphered or deciphered, auxiliary input means (12) which present a plurality of binary signals as cipher key initiating information, matrix storage means which store a cipher key in a matrix array (10), modulo-two adder means (18) connected for adding a selected binary element from said key matrix storage means with each of the binary signals obtained consecutively from said input means to produce a binary signal constituting an enciphered or deciphered bit of output message information, feedback means connected to inputs of said modulo-two adder means and comprising non-affine transformation means (32) for transforming the feedback signals derived from the said inputs, and shift control means (34) for rearranging selected matrix elements within said key matrix array in dependence on the said transformed feedback signals each time after an input bit has been enciphered or deciphered, whereby the said matrix array represents a variant cipher key which is currently developed as a function of the message information processed, characterised in that said key matrix storage means comprises a two-dimensional matrix (10), said modulo-two adder means comprises a plurality of modulo-two adders (18) which are arranged in a cascaded fashion and are connected each to a different element of a column or row of the key storage matrix (10), and said auxiliary input means comprises a generator of random binary signal (12) connected to the data input (14) and operating as a priming source.

2. The system as defined in claim 1, characterized in that said feedback means comprises a plurality of lines (24) connected to all intermediate stages (C1—C7) of said modulo-two adders (18) and at least one line (23; N88) connected to an element within said matrix.

3. A system as defined in a preceding claim, characterized in that said non-affine transformation means (32) comprises a substitution device (16 Word "S" Box).

4. The system as defined in claim 3, characterized in that said substitution device also comprises coding-decoding means (157) for converting from one base number to another base number.

5. A system as defined in a preceding claim, characterized in that said key matrix (10) consists of a plurality of shift registers (K1—K8) each capable of shifting information within the register cyclically around for rearranging a column or row of the matrix, and that a plurality of shift control output means (CTR1—CTR8) specify the number of shifts that are to be executed by each of said plurality of shift registers.

6. A variant key cryptographic system as defined in a preceding claim, characterized by second feedback means (26; 165) connected to selected elements of said matrix (10) for providing a binary word to a second non-affine transformation means (28; 256 Word "S" Box), said second non-affine transformation means generating a variant binary vector that is stored in selected elements (132-16) within the key matrix (10; K1—K8), preferably before the said shift control means (34) are operative for said rearranging of matrix elements.

7. The system as defined in claim 6, characterized in that said second non-affine trans-

9

formation means (28) is a substitution device (256 Word "S" Box).

**Patentansprüche**

1. Schlüsselgesteuerte Chiffrier-Einrichtung mit Eingabemitteln (14, 16), welche eine Folge elektrischer Signale in Binärform als zu verschlüsselnde oder zu entschlüsselnde Nachrichteninformation einführen, Hilfseingabemitteln (12), welche eine Anzahl von Binärsignalen als Chiffrierschlüssel- Anfangsinformation darbieten, Matrixspeichermitteln, welche einen Chiffrier-Schlüssel in einer Matrixanordnung (10) speichern, Modulo-zwei-Addierermitteln (18), welche so angeschlossen sind, daß sie ein ausgewähltes Binärelement aus den Schlüsselmatrixspeichermitteln zu einem jeden der aufeinanderfolgend aus den Eingabemitteln gewonnenen Binärsignalen zur Erzeugung eines ein verschlüsseltes oder entschlüsseltes Bit der Ausgangsnachtrichtinformation bildenen Binärsignals addieren, mit den Eingängen der Modulo-zwei-Addierermittel verbundenen Rückkopplungsmitteln, welche nicht-affine Transformationsmittel (32) zur Transformation der von den Eingängen abgeleiteten Rückkopplungssignale umfassen, und Schiebesteuermitteln (34) zur Umordnung von ausgewählten Matrixelementen innerhalb der Schlüsselmatrixanordnung in Abhängigkeit von den transformierten Rückkopplungssignalen, jedesmal nachdem ein Eingabebit verschlüsselt oder entschlüsselt worden ist, wodurch die Matrixanordnung einen variablen Chiffrier-Schlüssel darstellt, der laufend als Funktion der verarbeiteten Nachrichteninformatton entwickelt wird, dadurch gekennzeichnet, daß die Schlüsselmatrixspeichermittel eine zweidimensionale Matrix (10) umfassen, die Modulo-zwei-Addierermittel eine Anzahl von Modulo-zwei-Addierern (18) umfassen, die kaskadenförmig angeordnet und jeder mit einem anderen Element einer Spalte oder Zeile der Schlüsselspeichermatrix (10) verbunden sind, und die Hilfseingabemittel einen Generator (12) für Zufallsbinärsignale umfassen, der mit dem Dateneingang (14) verbunden ist und als Aktivierungsquelle arbeitet.

2. Einrichtung nach Anspruch 1, dadurch gekennzeichnet, daß die Rückkopplungsmittel eine Anzahl von mit allen Zwischenstufen (C1—C7) der Modulo-zwei-Addierer (18) verbundenen Leitungen (24) und wenigstens eine mit einem Element innerhalb der Matrix verbundene Leitung (23; N88) umfassen.

3. Einrichtung nach irgendeinem vorstehenden Anspruch, dadurch gekennzeichnet, daß die nichtaffinen Transformationsmittel (32) eine Substitutionsvorrichtung (16 Word "S" Box) umfassen.

4. Einrichtung nach Anspruch 3, dadurch gekennzeichnet, daß die Substitutionsvorrichtung auch Codier-Decodiermittel (157) zur Umwandlung von einer Basiszahl in eine andere Basiszahl umfaßt.

5. Einrichtung nach irgendeinem vorstehenden Anspruch, dadurch gekennzeichnet, daß die Schlüsselmatrix (10) aus einer Anzahl von Schieberegistern (K1—K8) besteht, von denen jedes zur Umordnung einer Spalte oder Zeile der Matrix Information innerhalb des Registers zyklisch herumschieben kann, und daß eine Anzahl von Schiebesteuerausgabemitteln (CTR1—CTR8) die Anzahl von Verschiebungen, die durch jedes der Anzahl von Schieberegistern auszuführen ist, spezifiziert.

6. Chiffrierenrichtung mit variablem Schlüssel nach irgendeinem vorstehenden Anspruch, gekennzeichnet durch mit ausgewählten Elementen der Matrix (10) verbundene zweite Rückkopplungsmittel (26; 165) zur Lieferung eines Binärworts an zweite nicht-affine Transformationsmittel (28; 256 Word "S" Box), wobei die zweiten nicht-affinen Transformationsmittel einen variablen Binärvektor erzeugen, der in ausgewählten Elementen (132—16) innerhalb der Schlüsselmatrix (10; K1—K8), vorzugsweise bevor die Schiebesteuermittel (34) die Matrixelemente umordnend in Wirkung treten, gespeichert wird.

7. Einrichtung nach Anspruch 6, gekennzeichnet, daß die zweiten nicht-affinen Transformationsmittel (28) eine Substitutionsvorrichtung (256 Word "S" Box) sind.

**Revendications**

1. Système cryptographique commandé par une clef et comportant des moyens d'entrée (14, 16) qui introduisent une séquence de signaux électriques sous forme binaire en tant qu'information de message devant être chiffrée ou déchiffrée, des moyens d'entrée auxiliaires (12) qui présentent une pluralité de signaux binaires en tant qu'information de déclenchement de la clef de chiffrage, des moyens formant mémoire de matrice qui mémorisent une clef de chiffrage dans un réseau matriciel (10), des moyens formant additionneur modulo deux (18) raccordés de manière à réaliser l'addition d'un élément binaire, choisi dans lesdits moyens formant mémoire de la matrice de clef, et de chacun des signaux binaires obtenus consécutivement à partir desdits moyens d'entrée en vue de produire un signal binaire constituant un bit chiffré ou déchiffré de l'information du message de sortie, des moyens de réaction raccordés à des entrées desdits moyens additionneur modulo deux et comportant des moyens de transformation non affine (32) servant à transformer les signaux de réaction dérivés desdites entrées, des moyens (34) de commande de décalage servant à réarranger des éléments de matrice choisis à l'intérieur dudit réseau de la matrice de clef en fonction desdits signaux de réaction transformés, chaque fois qu'un bit d'entrée a été chiffré ou déchiffré, ce qui a pour effet que ledit réseau de la matrice représente une clef de chiffrage variable qui est développée en permanence en fonction de l'information de message traitée, caractérisé en ce que lesdits moyens de mémoire de la matrice de clef comprennent une matrice bidimensionnelle (10), que lesdits moyens formant additionneur modulo deux sont constitués par une pluralité d'additionneurs modulo deux (18) qui sont montés en cascade et sont raccordés respectivement à des éléments différents d'une colonne ou d'une ligne de la matrice de mémoire de clef (10) et que lesdits moyens d'entrée auxiliaires comportent un générateur de signaux binaires aléatoires (12) raccordé aux moyens d'entrée de données (14) et fonctionnant en tant que source de déclenchement.

2. Système tel que défini dans la revendication 1, caractérisée en ce que lesdits moyens de réaction comportent une pluralité de lignes (24) raccordées à tous les étages intermédiaires (C1—C7) desdits additionneurs modulo deux (18) et au moins une ligne (23; N88) raccordée à un élément à l'intérieur de ladite matrice.

3. Système tel que défini dans une revendication précédente, caractérisé en ce que lesdits moyens (32) de transformation non affine comportent un dispositif de substitution (boîte "S" à 16 mots).

4. Système tel que défini dans la revendication 3, caractérisé en ce que ledit dispositif de substitution comporte également des moyens de codage-décodage (157) servant à convertir un nombre d'une base en un nombre d'une autre base.

5. Système tel que défini dans une revendication précédente, caractérisé en ce que ladite matrice de clef (10) est constituée par une pluralité de registres à décalage (K1—K8) qui sont capables chacun de décaler cycliquement une information à l'intérieur du registre afin de réarranger une colonne ou une ligne de la matrice, et qu'une pluralité de moyens de sortie de commande de décalage (CTR1—CTR8) spécifient le nombre des décalages qui doivent être exécutés par chaque registre de ladite pluralité de registres à décalage.

6. Système cryptographique à clef variable tel que défini dans une revendication précédente, caractérisé par des seconds moyens de réaction (26; 165) raccordés à des éléments sélectionnés de la matrice (10) pour délivrer un mot binaire à un second moyens de transformation non affine (28; boîte "S" à 256 mots), ledit second moyen de transformation non affine produisant un vecteur binaire variable qui est mémorisé dans des éléments sélectionnés (132—16) à l'intérieur de la matrice de clef (10; K1—K8), de préférence avant que lesdits moyens de commande de decalage (34) soient actifs pour ledit réarrangement des éléments de la matrice.

7. Système tel que défini dans la revendication 6, caractérisé en ce que ledit second moyen (28) de transformation non affine est un dispositif de substitution (boîte "S" à 256 mots).

# FIG. 1

FIG. 2A

FIG. 2

| FIG. 2A | FIG. 2B | FIG. 2C |
|---------|---------|---------|
| FIG. 2D | FIG. 2E | FIG. 2F |

INPUT BUFFER

| 1 | 0 | 1 | 0 | 1 | 0 | 1 | 0 |

SHIFT ←—— P58

K1
100
102

K2
104
106

K3
108
110

K4
112
114

C1
C2
C3
C4

0 035 048

# FIG. 2C

CTR 1 | 1 | 0 | 1 | 0 | 1 | 0 |

CTR 2 | 1 | 0 | 1 | 0 | 1 | 0 |

CTR 3 | 1 | 0 | 1 | 0 | 1 | 0 |

CTR 4 | 1 | 0 | 1 | 0 | 1 | 0 |

SHIFT 1
SHIFT 2
DECREMENT

P13
P16
P19
P22
P25
P28
P31
P34
P37
P40
P43
P46
P49
P52
P55

P14
P17
P20
P23
P26
P29
P32
P35
P38
P41
P44
P47
P50
P53
P56

0035048

FIG. 2D

FIG. 2E

FIG. 2F

# FIG. 3

K REGISTER

FF 134-16 · FF 134-15 · FF 134-2 · FF 134-1

FF 132-16 · FF 132-15 · FF 132-2 · FF 132-1

G · OR 140 · OR 142

136 · 138

SHIFT 1

SHIFT 2

144 · 146 · 148 · 150

# FIG. 4

N REGISTER

MODULO 2
ADDER

SHIFT 1

SHIFT 2

0 0035 048

# FIG. 5

16 WORD "S" BOX

# FIG. 6

256 WORD "S" BOX